# EUROPEAN PATENT APPLICATION

(11) **EP 1 276 110 A2**
(43) Date of publication of application: **15.01.2003**
(21) Application number: 02254758.2
(22) Date of filing: 08.07.2002
(51) Int. Cl.: G11B 27/034, G11B 27/34

(54) **Picture editing apparatus and picture editing method, picture recording/reproducing apparatus, and computer program**

(30) Priority: 11.07.2001 JP 2001210303
(71) Applicant: Pioneer Corporation, Tokyo-to (JP)
(72) Inventor: Nakayama, Yasutaka, c/o Pioneer Corp., Tokorozawa-shi, Saitama-ken (JP); Tanabe, Kyoko, c/o Pioneer Corp., Tokorozawa-shi, Saitama-ken (JP)
(74) Representative: Haley, Stephen

(57) **Abstract**

A picture editing apparatus is provided with: a display controlling device (21) for controlling a displaying unit so as to display a start part such as a title and the like targeted for an edition, in a first region (311) within a same screen (301a, 301b) on the displaying unit, and display an end part such as the title and the like, in a second region (312) within the same screen; a specifying device (25, 40) for specifying one of the start and second parts; and an editing device (21) for performing an editing process with respect to the start part displayed in the first region in accordance with an edition command inputted from an external portion, in a condition that the end part is displayed in the second region, if the start part is specified, and performing an editing process with respect to the end part displayed in the second region in accordance with an edition command inputted from the external portion, in a condition that the start part is displayed in the first region, if the end part is specified by said specifying device.

## Description

The present invention relates to a picture editing apparatus for and a picture editing method of editing a dynamic picture recorded on a recording medium, such as, for example, a DVD and the like, and a picture recording/reproducing apparatus including such a picture editing apparatus, and a computer program, which allows a computer to function as such a picture editing apparatus.

If a dynamic picture recorded on a traditional video tape is edited (for example, a coupling, an addition or a partial removal of a dynamic picture is performed), a plurality of vide decks are used to edit picture information itself related to the dynamic picture or content information itself including picture information and voice information.

On the other hand, a DVD recorder recently commercialized by the inventor et al. is designed such that the picture information or the content information recorded on the DVD can be simply reproduced in the recorded order, and in addition, a plurality of dynamic picture portions classified into a title unit, a chapter unit, a scene unit and the like, which are recorded on the DVD, can be reproduced in turn by the title unit, the chapter unit, the scene unit and the like, in accordance with a play list registered in a management information table for defining a type of an order to be reproduced (played). Thus, an editing work in such a DVD recorder is carried out not only by directly editing the picture information itself or the content information itself actually recorded on the DVD, but also by changing the play list registered in the management information table. In particular, if the edition is carried out by using such a DVD recorder, it is possible to display the start part of the dynamic picture portion of the title unit, the chapter unit, the scene unit or the like (namely, the start part of a title, a chapter, a scene or the like) on a screen. After that, it is possible to display an end part of the same dynamic picture portion (namely, the end part of the title, the chapter, the scene or the like).

According to the DVD recorder having the above-mentioned configuration, the editing work for shifting the title, the chapter, the scene and the like can be carried out while the start parts or the end parts are watched. Moreover, even a checking work after such an editing work can be carried out while the start parts or the end parts are watched.

However, according to the above-mentioned DVD recorder, it is necessary to watch the dynamic picture of the end part after watching the dynamic picture of the start part of the title, the chapter, the scene or the like and further carrying a switching operation of the screen (and an accessing operation and a displaying operation in the picture recording/reproducing apparatus), or on the contrarily, it is necessary to check the dynamic picture of the start part after watching the dynamic picture of the end part of the title, the chapter, the scene or the like and further carrying the switching operation of the screen (and the accessing operation and the displaying operation in the picture recording/reproducing apparatus).

Thus, unless an operating person strongly memorizes the dynamic picture portions related to at least the previously watched start or end part, this results in a problem that the editing work can not be executed surely or in a desirable format. Or, in order to strongly memorizes the dynamic picture portions related to at least the previously watched start or end part, this brings about in a problem that the execution of the editing work requires an unnecessary operational time and work or labor.

Moreover, even when a checking work for checking the edited result is executed after such an editing work, unless the operating person strongly memorizes the dynamic picture portions related to at least the previously watched start and end parts, this brings about a problem that it can not be certain whether or not the edited result agrees with his or her intention. Or, in order to strongly memorize the dynamic picture portions related to at least the previously watched start and end parts, this brings about the problem that the execution of the checking work requires the unnecessary operational time and work or labor.

The present invention is proposed in view of the above mentioned problems. It is therefore an object of the present invention to provide a picture editing apparatus and a picture editing method, which enables an operating person to execute an editing work and its checking work in such a condition that the operating person can understand its edition content on a screen visually easily and surely, and a picture recording/reproducing apparatus having such a picture editing apparatus, as well as a computer program, which allows a computer to function as such a picture editing apparatus.

The above object of the present invention can be achieved by a first picture editing apparatus provided with: a display controlling device for controlling a displaying unit so as to display a first part of a dynamic picture portion targeted for an edition among a plurality of dynamic picture portions constituting a dynamic picture with respect to which a recording or reproducing process is performed, in a first region within a same screen on the displaying unit, and display a second part different from the first part of the dynamic picture portion targeted for the edition, in a second region different from the first region within the same screen; a specifying device for specifying one of the first part and the second part; and an editing device for performing an editing process with respect to the first part displayed in the first region in accordance with an edition command inputted from an external portion, in a condition that the second part is displayed in the second region, if the first part is specified by the specifying device, and performing an editing process with respect to the second part displayed in the second region in accordance with an edition command inputted from the external portion, in a condition that the first part is displayed in the first region, if the second part is specified by the specifying device.

According to the first picture editing apparatus of the present invention, firstly on the occasion of the editing, the displaying unit displays the first part of a dynamic picture portion (e.g. the start parts of a title, a chapter, a scene, etc.) targeted for an edition among a plurality of dynamic picture portions (e.g. a title, a chapter, a scene, etc.) constituting a dynamic picture recorded in a recording medium such as, for example, DVD and the like, in the first region (e.g. the left half of the screen) under the control by the display controlling device. Then, it displays the second part in the dynamic picture portion (e.g. the end parts of a title, a chapter, a scene, etc.) targeted for the edition, in the second region within the same screen (e.g. the right half of the screen). Under this condition, the specifying device specifies one of the first and second parts. Then, an editing process with respect to the first part displayed in the first region is performed in accordance with an edition command inputted from an external portion, in a condition that the second part is displayed in the second region, if the first part is specified by the specifying device. On the other hand, an editing process with respect to the second part displayed in the second region is performed in accordance with an edition command inputted from the external portion, in a condition that the first part is displayed in the first region, if the second part is specified by the specifying device. Thus, an operating person (i.e., an operator) can edit the first part such as the start part of the same scene and the like, while watching the second part such as the end part of the scene and the like within the same screen. Moreover, the operating person can edit the second part such as the end part of the same scene and the like, while watching the first part such as the start part of the scene and the like within the same screen. As described above, the operating person can watch the start part of and the end part of the dynamic picture portion such as a title, a chapter, a scene, and the like with respect to which the editing process is to be performed, at the same time within the same screen, so that the operating person does not have to memorize the dynamic picture portion related to the start and/or end parts that the operating person watched in the past and can perform the editing work surely or in a desiring way.

As described above, according to the first picture editing apparatus of the present invention, it enables an operating person to perform editing work easily and in such a way as to easily and visually understand the edition contents on the screen.

In one aspect of the first picture editing apparatus of the present invention, the first part is a start part of the dynamic picture portion targeted for the edition and the second part is an end part of the dynamic picture portion targeted for the edition.

According to this aspect, an operating person can edit the start parts of a title, a chapter, a scene, and the like, while watching the end parts of the same title, the same chapter, the same scene, and the like within the same screen. Moreover, the operating person can edit the end parts of a title, a chapter, a scene, and the like, while watching the start parts of the same title, the same chapter, the same scene, and the like within the same screen. Therefore, it enables an operating person to edit one of or both of the start and end parts of the dynamic picture portion such as each title, each chapter, each scene, and the like, while watching the both parts, so that it is possible to perform editing work easily and in such a way as to easily and visually understand the edition contents on the screen.

In another aspect of the first picture editing apparatus of the present invention, the display controlling device controls the displaying unit so as to display the second part as a still picture in the second region if the first part is specified by the specifying device and also displays the first part as a still picture in the first region if the second part is specified by the specifying device.

According to this aspect, an operating person can edit the start part of a dynamic picture portion, while watching the end part of the dynamic picture portion as a still picture within the same screen. Moreover, the operating person can edit the end part of a dynamic picture portion, while watching the start part of the dynamic picture portion as a still picture within the same screen. Therefore, it enables an operating person to edit while watching both the start and end parts of the dynamic picture portion.

In another aspect of the first picture editing apparatus of the present invention, the display controlling device controls the displaying unit so as to display the first part as a dynamic picture and the editing device performs an editing process with respect to the first part displayed as the dynamic picture if the first part is specified by the specifying device, and the display controlling device controls the displaying unit so as to display the second part as a dynamic picture and the editing device performs an editing process with respect to the second part displayed as the dynamic picture if the second part is specified by the specifying device.

According to this aspect, an operating person can edit the first part of a dynamic picture portion displayed as a dynamic picture, while watching the second part of the dynamic picture portion within the same screen. Moreover, the operating person can edit the second part of a dynamic picture portion displayed as a dynamic picture, while watching the first part of the dynamic picture portion within the same screen. Therefore, it enables an operating person to edit while watching both the first and second parts of a dynamic picture portion, and further while watching one of them to be edited as a dynamic picture.

In another aspect of the first picture editing apparatus of the present invention, it is further provided with a selecting device for selecting the dynamic picture portion targeted for the edition among the plurality of dynamic picture portions.

According to this aspect, the selecting device selects the desired one among the plurality of dynamic picture portions as the dynamic picture portion targeted for the edition. Then, it is possible to edit one of or both of the first and second parts of the dynamic picture portion to have been selected, such as a title, a chapter, a scene, and the like, while watching the both parts.

In another aspect of the first picture editing apparatus of the present invention, the display controlling device controls the displaying unit so as to display the first or second part after the editing process if the first or second part is specified by the specifying device.

According to this aspect, the displaying unit displays the first or second part after the editing process under the control of the display controlling device if the first or second part is again specified by the specifying device after the displaying process, the specifying process, and then the editing process are once performed by the display controlling device, the specifying device, and the editing device, respectively. Therefore, it is possible to watch the first and second parts as the edition result within the same screen, and further after watching these first and second parts, it again becomes possible to further perform an editing process with respect to one of or both of the first and second parts by the editing device.

In another aspect of the first picture editing apparatus of the present invention, the display controlling device controls the displaying unit so as to display a third part different from the first and second parts in the dynamic picture portion targeted for the edition, in a third region different from the first and second regions within the same screen; the specifying device can specify one of the first part to the third part; and the editing device performs an editing process with respect to the first part, in a condition that the second and third parts are displayed on the second and third regions respectively, if the first part is specified by the specifying device, performs an editing process with respect to the second part, in a condition that the first and third parts are displayed in the first and third regions respectively, if the second part is specified by the specifying device, and performs an editing process with respect to the third part, in a condition that the first and second parts are displayed in the first and second regions, respectively, if the third part is specified by the specifying device.

According to this aspect, the displaying unit displays the first part of a dynamic picture portion (e.g. the start part of a title, a chapter, a scene, etc.) targeted for an edition, in the first region (e.g. the left half of the screen) under the control by the display controlling device. Then, it displays the second part in the dynamic picture portion (e.g. the end part of a title, a chapter, a scene, etc.) targeted for the edition, in the second region within the same screen (e.g. the right half of the screen). Moreover, it displays the third part in the dynamic picture portion (e.g. the middle part of a title, a chapter, a scene, etc. or the characterizing parts of a title, a chapter, a scene, etc., which are specified by an external portion or which are set in advance) targeted for the edition, on the third region within the same screen (e.g. the center part of the screen). Under this condition, an editing process with respect to the first part displayed in the first region is performed with the second part displayed in the second region and with the third part displayed on the third region, if the first part is specified by the specifying device. An editing process with respect to the second part displayed in the second region is performed with the first part displayed in the first region and with the third part displayed on the third region, if the second part is specified by the specifying device. An editing process with respect to the third part displayed on the third region is performed with the first part displayed in the first region and with the second part displayed in the second region, if the third part is specified by the specifying device. Thus, an operating person can edit the start part of the same scene and the like, while watching the end or center part of the scene and the like within the same screen. Therefore, it enables an operating person to perform editing work easily and in such a way as to easily and visually understand the edition contents on the screen.

The above object of the present invention can be achieved by a second picture editing apparatus provided with: an editing device for performing an editing process with respect to a dynamic picture portion recorded or reproduced in accordance with an edition command inputted from an external portion; and a display controlling device for controlling a displaying unit so as to display a start part of a dynamic picture portion with respect to which the editing process has been performed among the dynamic picture portion, in a first region within a same screen on the displaying unit, and also display an end part of the dynamic picture portion with respect to which the editing process has been performed, in a second region different from the first region within the same screen.

According to the second picture editing apparatus of the present invention, the editing device first performs an editing process with respect to a dynamic picture portion, such as, for example, a shift, an addition, a coupling or the like, which is recorded or reproduced on a recording medium, such as, for example, a DVD and the like, in accordance with an edition command inputted from an external portion. Then, the displaying unit displays a start part of a dynamic picture portion such as a title, a chapter, a scene, and the like on which the editing process has been performed, in a first region within the same screen, and display an end part of the dynamic picture portion such as a title, a chapter, a scene, and the like on which the editing process has been performed, in a second region different from the first region within the same screen, under the control of the display controlling device. Therefore, an operating person can watch the start part of and the end part of the dynamic picture portion such as a title, a chapter, a scene, and the like, with respect to which the editing process such as the shift and the like has been performed, at the same time within the same screen. Thus, in a checking work after the editing work, the operating person does not have to memorize the dynamic picture portion related to the start and/or end parts that the operating person watched in the past and can visually notice whether or not the edition result is in line with the operating person intention to be as a whole.

As described above, according to the second picture editing apparatus of the present invention, it enables an operating person to perform the checking work easily and in such a way as to easily and visually understand the edition result on the screen.

In one aspect of the second picture editing apparatus of the present invention, it is further provided with a specifying device for specifying one of the start and end parts, wherein the display controlling device controls the displaying unit so as to (i) display the end part as a still picture and the start part as a dynamic picture at the same time if the start part is specified by the specifying device and (ii) display the start part as a still picture and the end part as a dynamic picture at the same time if the end part is specified by the specifying device.

According to this aspect, the displaying unit displays the end part as a still picture and the start part as a dynamic picture at the same time, under the control of the display controlling device, if the start part is specified by the specifying device. Therefore, an operating person can understand what the end part is like with the still picture and can confirm the start part by the dynamic picture at the same time. Alternatively, the displaying unit displays the start part as a still picture and the end part as a dynamic picture at the same time, under the control of the display controlling device, if the end part is specified by the specifying device. Therefore, the operating person can understand what the start part is like with the still picture and can confirm the end part by the dynamic picture at the same time.

In another aspect of the second editing apparatus of the present invention, it is further provided with a specifying device for specifying a switching from one to another between the start and end parts, wherein the display controlling device controls the displaying unit so as to (i) display the one of the start and end parts as a dynamic picture and the another as a still picture at the same time if the editing process is performed and (ii) display the one of the start and end parts as a still picture and the another as a dynamic picture at the same time if the switching is specified by the specifying device.

According to this aspect, the displaying unit displays one of the start and end parts as a dynamic picture and the another as a still picture at the same time, under the control of the display controlling device, if the editing process is performed. Therefore, an operating person can confirm one of them by the dynamic picture, while understanding what the another is like with the still picture, at the same time. Then, the displaying unit displays one of the start and end parts as a still picture and the another as a dynamic picture at the same time, under the control of the display controlling device, if the switching is specified by the specifying device. Therefore, an operating person can confirm one of them by the still picture, while understanding what the another is like with the dynamic picture, at the same time.

Incidentally, with respect to the first or second picture editing apparatus described above, the still picture may be displayed on the both first and second regions, or the still picture may be displayed on the either one of the first and second regions and the dynamic picture on the another region, or the dynamic picture may be displayed on the both first and the second regions.

In another aspect of the first or second editing apparatus of the present invention, the display controlling device controls the displaying unit so as to display the first or second part, or the start or end part as a dynamic picture only for a predetermined time period.

According to this aspect, the displaying unit displays several seconds of the start point or the end point of, for example, a title, a chapter, a scene, and the like, as a dynamic picture under the control of the display controlling device. More concretely, the predetermined time period may be two or three seconds each before and after the start point with respect to the start part, or two or three seconds each or the like before and after the end point with respect to the end part. As a result, an operating person can easily perform the editing work and the checking work, while watching the dynamic picture which is enough long to confirm the content.

In another aspect of the first or second editing apparatus of the present invention, it is further provided with an input device for inputting the edition command.

According to this aspect, when the input device inputs the edition command, such as, for example, the shifts of the start and end parts, the shift of a scene, and the like, the editing device performs an edition process in accordance with this. Thus, an operating person can easily perform the editing work and the checking work by inputting the edition order through the input device, while watching two pictures displayed on the first and second regions within the screen of the displaying unit. Incidentally, such an input device is constructed by a remote controller placed away from the apparatus main body, a control panel disposed on the apparatus main body, and the like.

In another aspect of the first or second editing apparatus of the present invention, the edition command includes a command to change a position, in a back or forth direction on a time axis of the dynamic picture, of at least one of the first and second parts or at least one of the start and end parts.

According to this aspect, when the edition command to change the position, in the back or forth direction on the time axis, of at least one of the first and second parts or the start and end parts is inputted, the editing device performs an editing process in accordance with this. At the time, especially, if the first and/or second parts or the start and/or end parts of the dynamic picture whose position or positions on the time axis are changed back and forth, are displayed as a dynamic picture on the first and/or second regions, it is possible to easily perform the editing work and the checking work.

In another aspect of the first or second editing apparatus of the present invention, the display controlling device controls the displaying unit so as to display a text data indicating a position of the first part or start part on a time axis of the dynamic picture, on a position adjacent to or corresponding to the first region within the same screen, and display a text data indicating a position of the second part or end part on the time axis of the dynamic picture, on a position adjacent to or corresponding to the second region within the same screen.

According to this aspect, the displaying unit displays a text data indicating a position of the first or start part on a time axis of the dynamic picture, such as a time data, an address data, a title number, a chapter number, a scene number, and the like, on a position adjacent to or corresponding to the first region within the same screen, under the control of the display controlling device. Moreover, it displays a text data indicating a position of the second or end part on a time axis of the dynamic picture, such as a time data, an address data, a title number, a chapter number, a scene number, and the like, on a position adjacent to or corresponding to the second region within the same screen. Therefore, an operating person can surely understand positioning on the whole dynamic picture of the dynamic picture portion targeted for an edition, when watching two pictures and the two text data corresponding to them.

In another aspect of the first or second editing apparatus of the present invention, a plurality of dynamic picture portions constituting the dynamic picture are registered in a play list which at least indicates an output order of the dynamic picture portions, and the editing device performs the editing process by adding a change to the play list.

According to this aspect, since the editing device performs the editing process by adding a change to the play list on which the output order of a plurality of dynamic picture portions and the like are registered, it is possible to easily perform an editing process as compared with, for example, a direct edition (a removal, an addition, a coupling, a change of picture order, and the like) of the dynamic picture itself on a recording medium on which the dynamic picture is recorded. Then, if the dynamic picture recorded on the recording medium, such as, for example, a DVD and the like, is reproduced or outputted in accordance with the play list, it is possible to reproduce or output the dynamic picture such that the editing process by the picture editing apparatus is reflected thereto.

In one aspect related to the above described play list, the play list is recorded in one portion of a recording medium on which the dynamic picture is recorded.

By constituting in this manner, since the play list is recorded in one portion (e.g. a management information area disposed on a lead-in area or a lead-out area) of a recording medium, such as, for example, a DVD and the like, a special response is not necessary even if the recording medium is changed or is dealt with another DVD recorder or the like, which is extremely useful in practical.

In another aspect related to the above described play list, the picture editing apparatus may be further provided with a memory device for storing the play list.

By constituting in this manner, the output or reproduction of the dynamic picture by a DVD recorder or the like provided with the picture editing apparatus can be performed in accordance with the play list stored transiently or for a long time in the memory device provided for the picture editing apparatus. Then, especially by adding a change to the play list as stored above, it is possible to perform an editing process easily.

Incidentally, such a play list may be constructed such that it is stored in a predetermined region on a recording medium such as, for example, a DVD and the like, is read out every time the DVD and the like is set to a DVD recorder or the like, is transmitted to the memory device constructed by a built-in RAM or the like, and is then rewritten into the predetermined region of the DVD, as the occasion demands such as when ending a play, changing a disc, switching off, and the like.

In another aspect related to the above described play list, address information corresponding to the plurality of dynamic picture portions on a recording medium on which the dynamic picture is recorded may be registered in the play list.

By constituting in this manner, the output or reproduction of the dynamic picture by a DVD recorder or the like provided with the picture editing apparatus can be performed in accordance with the address information registered in the play list. Then, especially by adding a change to the address information as registered above, it is possible to perform an editing process easily.

The above object of the present invention can be achieved by a first picture editing method provided with: a display controlling step of controlling a displaying unit so as to display a first part of a dynamic picture portion targeted for an edition among a plurality of dynamic picture portions constituting a dynamic picture with respect to which a recording or reproducing process is performed, in a first region within a same screen on the displaying unit, and display a second part different from the first part of the dynamic picture portion targeted for the edition, in a second region different from the first region within the same screen; a specifying step of specifying one of the first part and the second part; and an editing step of performing an editing process with respect to the first part displayed in the first region in accordance with an edition command inputted from an external portion, in a condition that the second part is displayed in the second region, if the first part is specified by the specifying step, and performing an editing process with respect to the second part displayed in the second region in accordance with an edition command inputted from the external portion, in a condition that the first part is displayed in the first region, if the second part is specified by the specifying step.

According to the first picture editing method of the present invention, the displaying unit displays the first part of a dynamic picture portion targeted for an edition among a plurality of dynamic picture portions constituting a dynamic picture recorded in a recording medium such as, for example, DVD and the like, in the first region in the display control process. Then, it displays the second part in the dynamic picture portion targeted for the edition, in the second region within the same screen. Under this condition, the specifying process specifies one of the first and second parts. An editing process with respect to the first part displayed in the first region is performed in accordance with an edition command inputted from an external portion, in a condition that the second part is displayed in the second region, if the first part is specified by the specifying device. On the other hand, an editing process with respect to the second part displayed in the second region is performed in accordance with an edition command inputted from the external portion, in a condition that the first part is displayed in the first region, if the second part is specified by the specifying process. Thus, an operating person can edit the first part such as the start part of the same scene and the like, while watching the second part such as the end part of the scene and the like within the same screen. Moreover, the operating person can edit the second part such as the end part of the same scene and the like, while watching the first part such as the start part of the scene and the like within the same screen.

As described above, according to the first picture editing method of the present invention, it enables an operating person to perform editing easily and in such a way as to easily and visually understand the edition contents on the screen, as is the case with the first picture editing apparatus of the present invention described above.

The above object of the present invention can be achieved by a second picture editing method provided with: an editing step of performing an editing process with respect to a dynamic picture portion recorded or reproduced in accordance with an edition command inputted from an external portion; and a display controlling step of controlling a displaying unit so as to display a start part of a dynamic picture portion with respect to which the editing process has been performed among the dynamic picture portion, in a first region within a same screen on the displaying unit, and also display an end part of the dynamic picture portion with respect to which the editing process has been performed, in a second region different from the first region within the same screen.

According to the second picture editing method of the present invention, the editing process performs an editing process with respect to a dynamic picture portion, such as, for example, a shift, an addition, a coupling or the like, which is recorded or reproduced on a recording medium, such as, for example, a DVD and the like, in accordance with an edition command inputted from an external portion. Then, the displaying unit displays a start part of a dynamic picture portion such as a title, a chapter, a scene, and the like with respect to which the editing process has been performed, in a first region within the same screen, and display an end part of the dynamic picture portion such as a title, a chapter, a scene, and the like with respect to which the editing process has been performed, in a second region different from the first region within the same screen, under the control of the display controlling device. Therefore, an operating person can watch the start part of and the end part of the dynamic picture portion such as a title, a chapter, a scene, and the like on which the editing process such as the shift and the like, at the same time within the same screen.

As described above, according to the second picture editing method of the present invention, it enables an operating person to perform the checking work easily and in such a way as to easily and visually understand the edition result on the screen, as is the case with the picture editing apparatus of the present invention described above.

The above object of the present invention can be achieved by a picture recording / reproducing apparatus provided with: the above described first or second picture editing apparatus (including their various aspects); and a recording / reproducing device for performing at least one of a recording process and a reproducing process of a dynamic picture.

According to the picture recording / reproducing apparatus of the present invention, since it is provided with the above described first or second picture editing apparatus, it enables an operating person to perform the editing and the checking work of the dynamic picture in such a way as to easily and visually understand the edition contents on the screen.

Incidentally, the picture recording / reproducing apparatus may be constructed so as to be provided with both the first picture editing apparatus (including its various aspects) and the second picture editing apparatus (including its various aspects) of the present invention described above.

In addition, the recording / reproducing device of the picture recording / reproducing apparatus of the present invention preferably performs a recording process or a reproducing process on a randomly accessible recording medium such as, for example, a DVD and the like. Then, it may also be constructed such that it can execute a special reproduction such as a search, fast forwarding, rewinding, or the like, on the first or start part displayed in the first region, and on the second or end part displayed in the second region, respectively in the editing work and the checking work.

The above object of the present invention can be also achieved by a computer program of instructions executable by a computer in a picture editing apparatus to perform the above described first or second method of the present invention (including their various aspects), more concretely, respective constitutional elements of the display control step, the specifying step, the editing step, and the like, related to the above described first or second method of the present invention.

According to the computer program of the present invention, the above described first or second method of the present invention can be relatively easily realized as a computer reads and executes the program of instructions from the program such as a CD-ROM (Compact Disc - Read Only Memory), a ROM, a DVD-ROM (DVD Read Only Memory), a floppy disk or the like, or as it executes the program after downloading the program through communication device. Moreover, the program of instructions can be sent from a server device with other data such as picture information indicating the dynamic picture, audio information corresponding to it, and the like.

Incidentally, the program storage device may be constructed to store a program of instructions to cause the computer to perform both of the above described first and second methods of the present invention (including its various aspects).

The nature, utility, and further features of this invention will be more clearly apparent from the following detailed description with reference to preferred embodiments of the invention when read in conjunction with the accompanying drawings briefly described below.

In the Drawings;
FIG.1 is a block diagram showing a picture recording/reproducing apparatus according to an embodiment of the present invention;
FIG.2 is a front view showing a front panel in an apparatus body including an operation unit and a display unit of the picture recording/reproducing apparatus in the embodiment;
FIG.3 is a front view showing an appearance of a remote controller of the picture recording/reproducing apparatus in the embodiment;
FIG.4 is a plan view of a display in which two edition screens are displayed within the same screen, in the embodiment;
FIG.5 is a plan view of a display in which two test reproduction screens are displayed within the same screen, in the embodiment; and
FIG.6 is a flowchart showing an editing process and a test reproducing process in the picture recording/reproducing apparatus in the embodiment.

Preferred embodiments of the present invention will be explained below with reference to the drawings. In the embodiment described below, the present invention is applied to a picture recording/reproducing apparatus (namely, a DVD recorder) including a picture editing apparatus, in which it is possible to record on and reproduce from the DVD.

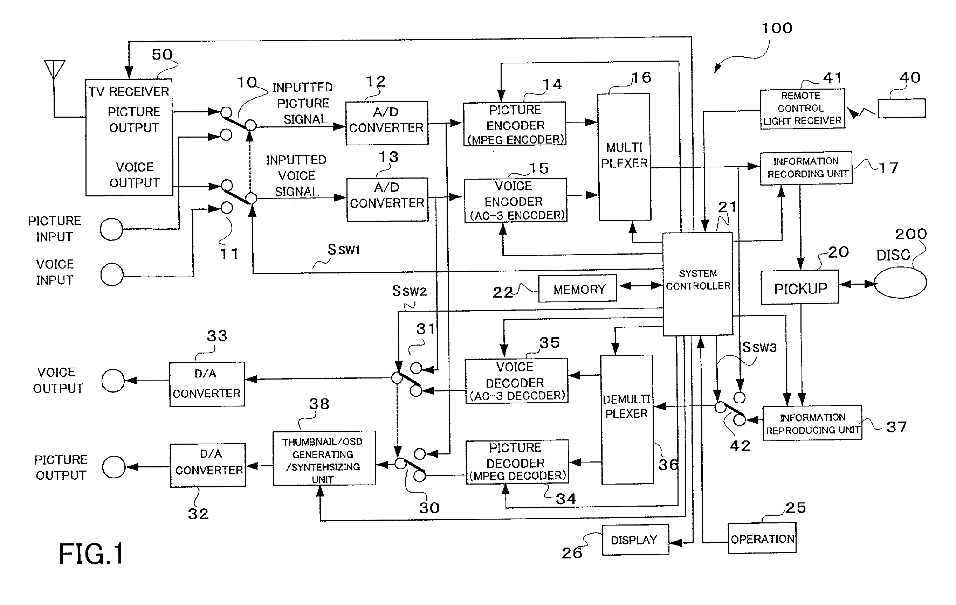

At first, the entire configuration of the picture recording/reproducing apparatus in this embodiment is described with reference to FIGs.1 to 3.

In FIG.1, a picture recording/reproducing apparatus 100 is functionally roughly divided into a side of a recording apparatus for recording content information onto a DVD 200 and a side of a reproducing apparatus for reproducing the content information from the DVD 200, and is provided with a system controller 21 for controlling the picture recording/reproducing apparatus 100 as a whole. By the way, in this embodiment, it is assumed that the DVD 200 is a writable DVD-R, DVD-RW, DVD-RAM and the like.

A TV receiver 50 for receiving a TV (Television) electric wave is installed on the side of the recording apparatus in the picture recording/reproducing apparatus 100. The TV receiver 50 is designed so as to receive a TV signal through an antennal and then output a picture signal and a voice signal, respectively.

The side of the recording apparatus in the picture recording/reproducing apparatus 100 is further provided with: switches 10 and 20 for switching between a picture input and a voice input from an external input terminal and between a picture output and a voice output from the TV receiver 50, respectively, on the basis of a switch control signal S_{SW1} from the system controller 21; A/D converters 12 and 13 for performing an A/D (Analog to Digital) conversion on the picture signal and the voice signal from those switches 10 and 11, respectively; a picture encoder (MPEG encoder) 14 and a voice encoder (AC-3 encoder) 15 for encoding the picture signal and the voice signal from those A/D converters 12 and 13, respectively; a multiplexer 16 for multiplexing the picture signal and the voice signal encoded by the picture encoder 14 and the voice encoder 15; an information recording unit 17 for sending the multiplexed signal as a driving signal for a writing laser light; and an optical pickup 20 for emitting a data writing laser light onto the DVD 200 in accordance with the driving signal.

On the other hand, the side of the reproducing apparatus in the picture recording/reproducing apparatus 100 is provided with: the optical pickup 20, which is shared with the recording apparatus side, for emitting a data reading laser light onto the DVD 200 and receiving a reflection light from the DVD 200 and the like; an information reproducing unit 37 for generating a detection signal from a light reception output of the optical pickup 20; a demultiplexer 36 for demultiplexing the detection signal generated by the information reproducing unit 37 and outputting the picture signal and the voice signal; a picture decoder (MPEG decoder) 34 and a voice decoder (AC-3 decoder) 35 for decoding the picture signal and the voice signal, respectively; and switches 30 and 31 that are respectively switched in accordance with a switch control signal S_{SW2} from the system controller 21.

The side of the reproducing apparatus in the picture recording/reproducing apparatus 100 is further provided with: a thumbnail/OSD generating/synthesizing unit 38 for generating or synthesizing a thumbnail and an OSD (Operation Status Display) with regard to the picture signal from the A/D converter 12 or the picture decoder 34 that is sent through the switch 30; a D/A (Digital to Analog) converter 32 for performing a D/A conversion on the digital output of the thumbnail/OSD generating/synthesizing unit 38; and a D/A converter 33 for performing a D/A conversion on the voice signal from the A/D converter 13 or the voice decoder 35 sent through the switch 31. Then, an analog picture output and an analog voice output, which are outputted by those D/A converters 32 and 33, are outputted from a speaker and a display, such as a CRT, a plasma display, a liquid crystal display and the like (not shown), respectively.

Also, this is designed such that whether or not the picture signal and the voice signal are normally recorded can be checked in the picture output and the voice output by switching a switch 42, in accordance with a switch control signal S_{SW3} from the system controller 21.

Moreover, the picture recording/reproducing apparatus 100 is further provided with: an operation unit 25 having a function key, a multi-dial and the like for entering various operation commands; a display unit 26, such as a liquid crystal display or the like, for displaying the operation state of the picture recording/reproducing apparatus 100 and the like as a text or picture data; and a remote control light receiver 41, on the front panel. A remote controller 40 is installed away from the apparatus main body. Various command signals, which are entered by the remote controller 40 and converted into optical signals, are received by the remote control light receiver 41, and inputted to the system controller 21.

On the other hand, the various command signals entered by the operation unit 25 are also inputted to the system controller 21. The system controller 21 is designed so as to control the picture recording/reproducing apparatus 100 as a whole, correspondingly to the various operation command signals entered by the operation unit 25 or the remote controller 40, in accordance with a preset computer program.

By the way, a memory 22 composed of RAM for storing therein various data necessary for the control and the like is connected to the system controller 21. In this embodiment, it stores a management information table in which an execution state and an execution mode in the picture recording/reproducing apparatus 100 are correlated to each other, and it further stores a play list for defining a reproducing order of each title, each chapter and each scene, which are targeted for a rewriting operation in an editing process as described later, and the like.

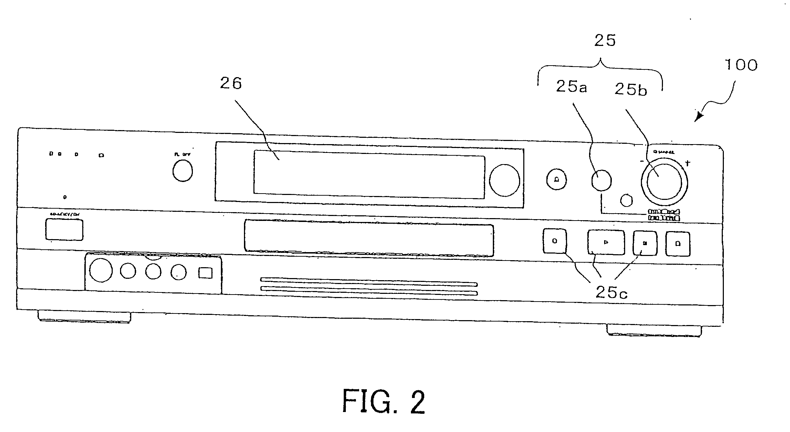

Here, as shown in FIG.2, the operation unit 25 and the display unit 26 are placed on the front panel of the picture recording/reproducing apparatus 100.

In FIG.2, the operation unit 25 is composed of: a function key 25a for selecting the execution mode (for example, a record mode, a reproduction mode, a TV reception mode, an edition mode and the like) of the picture recording/reproducing apparatus 100; and a multiple dial 25b for setting the execution state (for example, a set value of a tone volume, a set value of a record level, a set value of a channel and the like) that can be executed at the execution mode selected through the function key 25a. In addition to them, the operation unit 25 is composed of various operation switches 25c such as a reproduction start, a reproduction stop and the like.

By the way, the selection of the execution mode and the setting of the execution state as mentioned above are carried out simply and quickly by referring to the management information table stored in the memory 22.

Also, the display unit 26 is designed so as to display the execution mode or the operation state selected in the operation unit 25 as mentioned above and the execution state set in the selected execution mode, by using a text data composed of short words, such as, for example, English, Katakana (i.e., one kind of Japanese characters) or the like, or a picture data such as a symbol, a graph, an indicator and the like.

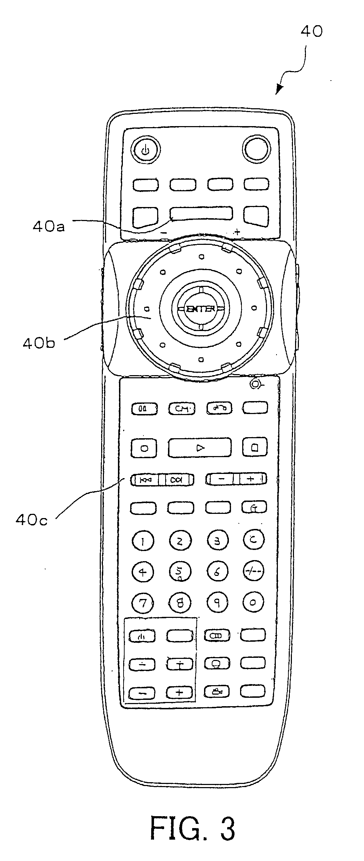

On the other hand, as shown in FIG.3, the remote controller 40 is composed of various operation keys and operation switches. In particular, it is composed of: a disc navigation key 40a for selecting an edition mode; a multiple dial 40b by which the execution states of several execution modes can be set; and various operation switches 40c including a reproduction key, a stop key, a fast forward key, a fast backward key, ten key switches and the like, in addition.

Again in FIG.1, this embodiment is designed such that at the edition mode, the picture data for the thumbnail and OSD (Operation Status Display) can be generated by the thumbnail/OSD generating/synthesizing unit 38 and can be picture-outputted instead of the usual picture signal, under the control of the system controller 21. Here, "Thumbnail" is a still picture representative of the title, the chapter, the scene or the like, and it implies a plurality of small still pictures usually displayed within the same screen. Such an edition mode is actuated, for example, by operating the disc navigation key 40a shown in FIG.3.

This embodiment is especially designed such that when the particular editing process, such as the shift, the addition or the removal of the title, the chapter, the scene or the like, is executed at this edition mode, two edition screens can be displayed within the same screen of the display, and further designed such that two test reproduction screens (namely, check screens) to check or confirm the edited result can be displayed within the same screen.

As mentioned above, as described with reference to FIGs.1 to 3, according to the picture recording/reproducing apparatus 100 in this embodiment, the picture signal and the voice signal inputted from the external input terminal or the TV receiver 50 can be recorded onto the DVD 200. Moreover, the picture signal and the voice signal recorded on the DVD 200 can be outputted as the picture output and the voice output to an external portion. It is designed so as to carry out an editing process using the two edition screensand a test reproducing process using the two test reproduction screens as explained below, on the basis of the various operation command signals inputted through the operation unit 25 (refer to FIG.2) or the remote controller 40 (refer to FIG.3).

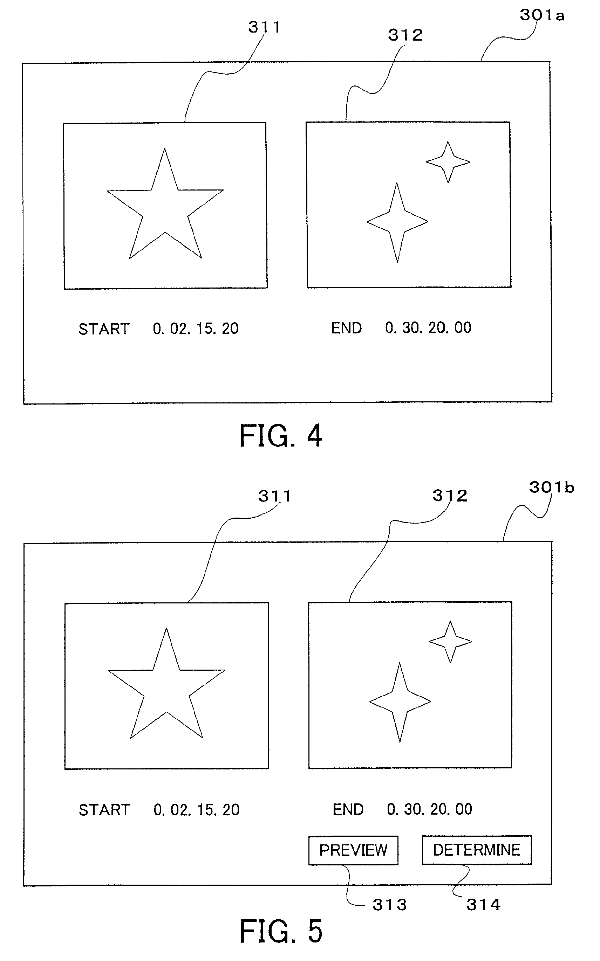

The editing process and the test reproducing process in the picture recording/reproducing apparatus 100 having the above-mentioned configuration will be described below with reference to FIGs.4 to 6.

The editing process and the test reproducing process as described below are mainly executed by the system controller 21 shown in FIG.1. Actually, the computer program for controlling the editing process and the test reproducing process is mainly executed by the system controller 21.

When the particular editing process, for example, such as the shift, the addition or the removal of the title, the chapter, the scene or the like, is carried out, this computer program instructs the system controller 21 1 as well as the operation unit 25, the thumbnail/OSD generating/synthesizing unit 38, the remote controller 40 and the like which are controlled by the system controller 21, to function as (i) a display controlling device for generating and outputting a picture signal so as to display a first part (for example, a start part) in a dynamic picture portion targeted for the edition among a plurality of dynamic picture portions (for example, the title, the chapter, the scene and the like) that are recorded on the DVD 200 and reproduced in accordance with the play list, in a first region within the same screen on the display unit, and display a second part (for example, an end part) different from the first part of the dynamic picture portion similarly targeted for the edition, in a second region different from the first region within the same screen, (ii) a specifying device that can specify one of the first part and the second part, by an external operation at the operation unit 25 and/or the remote controller 40, and (iii) an editing device for performing an editing process with respect to the first part displayed in the first region in accordance with the operation command inputted through the operation unit 25 and/or the remote controller 40 in such a condition that the second part is displayed in the second region, if the first part is specified by the specifying device, and performing an editing process with respect to the second part displayed in the second region in accordance with the operation command inputted through the operation unit 25 and/or the remote controller 40 in such a condition that the first part is displayed in the first region, if the second part is specified by the specifying device.

Moreover, instead of or in addition to such an editing process, when the particular editing process, for example, such as the shift, the addition or the removal of the title, the chapter, the scene or the like, is carried out and then the test reproducing process for checking the edited result is carried out, this computer program instructs the system controller 21 as well as the operation unit 25, the thumbnail/OSD generating/synthesizing unit 38, the remote controller 40 and the like which are controlled by the system controller 21, to function as (i) an editing device for performing an editing process with respect to a dynamic picture, which is recorded on the DVD 200 and reproduced in accordance with the play list, in accordance with the operation command inputted through the operation unit 25 and/or the remote controller 40, and (ii) a display controlling device for generating and outputting a picture signal so as to display the start part of the dynamic picture portion (for example, the title, the chapter, the scene and the like) with respect to which the editing process has been performed, among the dynamic picture, in a first region within the same screen on the display, and also display the end part of the dynamic picture portion with respect to which this editing process has been performed, in a second region different from the first region within the same screen.

Incidentally, such a computer program may be stored in the memory 22, the DVD 200, another built-in RAM or the like, or may be downloaded through a communication device, such as a modem, a portable telephone or the like, to the memory 22 and the like.

In this embodiment, it is assumed that the edition of the content information recorded on the DVD 200 (namely, the information including both the picture information indicated by the picture signal and the voice information picture indicated by the voice signal corresponding to the picture information) is carried out by rewriting (i) the recording address of the title, the chapter, the scene or the like on the DVD 200 and (ii) the play list for defining the reproducing order of the title, the chapter, the scene or the like. If the editing process is done by rewriting the play list as mentioned above, it is not necessary to rewrite the original content information recorded on the DVD 200. Thus, this is convenient on the actual usage. Moreover, the editing process itself can be done by the relatively simple process such as the update of the play list stored in the memory 22.

However, as long as the DVD 200 is the writable recording medium, the edition can be carried out by directly rewriting the content information recorded on the DVD 200.

Such a play list is read out from the memory 22 when the DVD 200 is exchanged or a power supply is turned off, and is then recorded into a management information area prepared in a lead-in area or a lead-out area of the DVD 200, for example. Then, the play list recorded on the DVD 200 as mentioned above is read out each time the DVD 200 is set to the picture recording/reproducing apparatus 100, and it is stored into the memory 22. In the condition that a reproduction position or a reproduction order after that are determined in accordance with the play list, the reproduction is carried out.

At first, the editing process in this embodiment that is done while the two edition screens are displayed within the same screen is described with reference to FIG.4. Here, FIG.4 is a plan view of a display unit showing the condition that the two edition screens are displayed within the same screen.

In FIG.4, when a desirable title or the like is selected from a plurality of titles or the like recorded on the DVD 200 by the operation unit 25 or the remote controller 40, in accordance with the picture output generated by the system controller 21 or the like, a start part of the title targeted for this edition or the like is displayed as a still picture or a dynamic picture in a first region 311 within the screen 301a of the display unit, and an end part of the title targeted for this edition or the like is displayed as the still picture or the dynamic picture in a second region 312 within the screen 301a.

If the first region 311 is further specified as the edition target by the operation unit 25 or the remote controller 40, the editing process is performed with respect to the start part displayed in the first region 311 in accordance with the operation command entered by the operation unit 25 or the remote controller 40, in the condition that the end part is displayed in the second region 312 as the still picture or the dynamic picture. At this time, for example, the editing process for changing a position of the start part on a time axis of the dynamic picture (for example, moving it by several seconds before or after) while displaying the start part as the still picture or the dynamic picture in the first region 311 is performed .

On the other hand, if the second part 312 is specified as the edition target by the operation unit 25 or the remote controller 40, the editing process is performed with respect to the end part displayed in the second region 312 in accordance with the operation command entered by the operation unit 25 or the remote controller 40, in the condition that the start part is displayed in the first region 311 as the still picture or the dynamic picture. At this time, for example, the editing process for changing a position of the end part while displaying the end part as the still picture or the dynamic picture in the second region 312 is performed.

As mentioned above, according to this embodiment, the operating person can simultaneously watch the start part and the end part of the dynamic picture portion, such as the title, the chapter, the scene or the like, with respect to which the editing process is carried out, within the same screen. Thus, it is possible to carry out the editing work surely or in the desirable format without any necessity to memorize the dynamic picture portion related to the previously watched start and/or end parts.

Moreover, in this embodiment, preferably, the start part or the end part after the execution of the editing process is displayed as the still picture or the dynamic picture by the display unit, if the start part or the end part is specified by the operation unit 25 or the remote controller 40, after the editing process is performed in the start part of the first region 311 or the end part in the second region 312. Such configuration enables the start part and the end part as the edited result to be watched as the still picture or the dynamic picture within the same screen. Moreover, after watching the start part and the end part thereof, if the operating person is not fond of it, the operating person can perform the further editing process with respect to one or both of the start part and the end part thereof, by again entering the operation command through the operation unit 25 or the remote controller 40.

The test reproducing process for displaying the two test reproducing screens within the same screen will be described below with reference to FIG.5. Here, FIG.5 is a plan view of a display unit in which the two test reproduction screens are displayed within the same screen.

As shown in FIG.5, on a screen 301b of the display, the start part of the title after the execution of the editing process or the like is displayed as the still picture or the dynamic picture in the first region 311 within the screen 301b, and the end part of the title after the execution of the editing process or the like is displayed as the still picture or the dynamic picture in the second region 312 within the screen 301b, in accordance with the picture output generated by the system controller 21 or the like, after the editing process, for example, such as the shift, the addition, the coupling or the like, is performed with respect to the dynamic picture recorded on the DVD 200, in accordance with the operation command entered by the operation unit 25 or the remote controller 40.

At the state shown in FIG.5, if the start part is specified for the dynamic picture display through the operation unit 25 or the remote controller 40, the end part is displayed as the still picture. Then, the start part is displayed as the dynamic picture by the operation of a preview button 313. On the other hand, if the end part is specified for the dynamic picture display through the operation unit 25 or the remote controller 40, the start part is displayed as the still picture. Then, the end part is displayed as the dynamic picture by the operation of the preview button 313. After that, the series of the checking processes is ended by the operation of a confirmation button 314.

As mentioned above, according to this embodiment, the operating person can simultaneously watch the start part and the end part of the dynamic picture portion, such as the title, the chapter, the scene or the like, after the execution of the editing process, within the same screen. Thus, when carrying out the checking work after the editing work, the operating person can visually easily know whether or not the edited result entirely agrees with his or her intension, without any necessity to memorize the dynamic picture portion related to the previously watched start and end parts.

In this embodiment, the specification of the start part or the end part to be displayed as the dynamic picture may be especially the specification based on the switching manner from the start part to the end part or from the end part to the start part, through a clicking operation in any one key or button of the operation unit 25 and the remote controller 40. Such configuration enables the end part to be displayed as the dynamic picture immediately after the start part is displayed as the dynamic picture, or enables the start part to be displayed as the dynamic picture immediately after the end part is displayed as the dynamic picture.

In addition, in this embodiment, as shown in FIGs.4 and 5, a time data indicative of a start time on a time axis of the dynamic picture is displayed on a lower side of the first region 311 (e.g., "START 0.02.15.20"), and a time data indicative of an end time on the time axis of the dynamic picture is displayed on a lower side of the second region 312 (e.g., "END 0.30.20.00"). Thus, since watching those time data, the operating person can carry out the editing process while surely grasping the positioning in the entire dynamic picture of the dynamic picture portion targeted for the edition.

By the way, in FIGs.4 and 5, as the start part or the end part, such as the title or the like, to be displayed in the first region 311 or the second region 312, the dynamic picture near the start part or near the end part may be displayed only for a predetermined period, for example, between several seconds and ten-odd seconds, and the picture signal may be generated so as to display a final frame or a first frame as the still picture. Such a configuration enables the operating person to check on one screen the joints of the pictures near the start part and the end part after the edition, while watching a picture signal of a length to a degree that its content can be checked. Thus, the operating person can easily carry out the editing work and the checking work. By the way, such a predetermined period may be fixed, or it may be set at a desirable period through the external input in the picture editing apparatus.

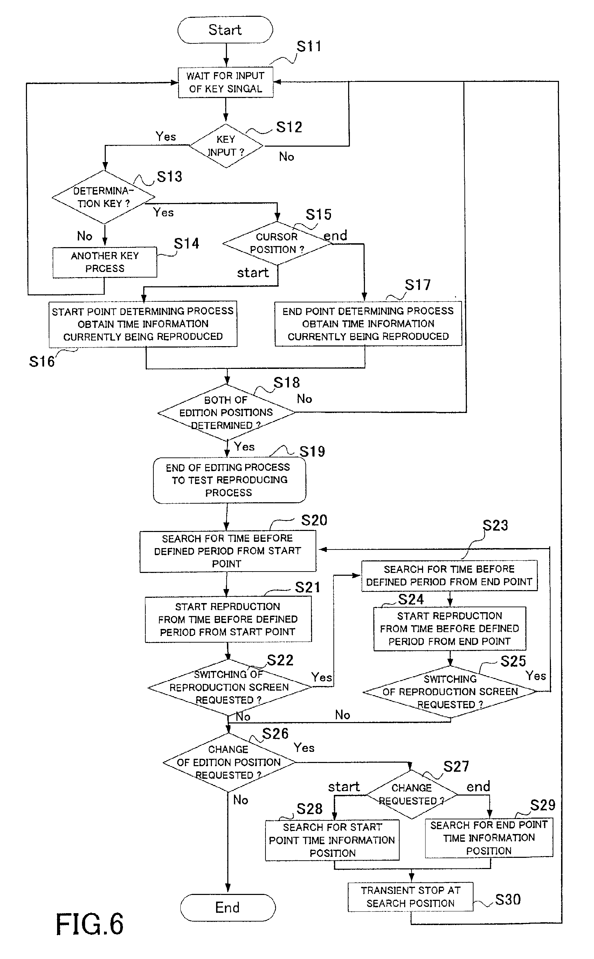

A series of processes including the editing process described with reference to FIG.4 and the test reproducing process described with reference to FIG.5 that is carried out thereafter, which are carried out in the picture recording/reproducing apparatus 100, will be described below with reference to a flowchart of FIG.6.

In FIG.6, while the operational flow firstly waits for an input of a key signal related to an editing operation through the operation unit 25 or the remote controller 40 (Step S11), it is judged whether or not there is a key input (Step S12). If there is the key input (Step S12 : YES), it is judged whether or not a determination key is pushed (Step S13). Here, if the determination key (for example, a central button of the multiple dial 40b in the remote controller 40 shown in FIG.3) is pushed (Step S13 : YES), the operational flow branches into a step S15. On the other hand, if the determination key is not pushed (Step S13 : NO), after the execution of the processes corresponding to keys except the input key (Step S14), the operational flow returns back to the step S11, and it becomes at the wait state.

In succession, at the step S15, it is judged whether or not a cursor position is at the start part or the end part. Here, if the cursor position is at the start part (Step S15 : "start"), a start point determining process is carried out in accordance with the external operation of the operating person who uses the operation unit 25 or the remote controller 40 while watching the screen such as FIG.4 (especially, the first region 311). Then, the time information of the dynamic picture currently being reproduced is obtained (Step S16). On the other hand, at the step S15, if the cursor position is at the end part (Step S15 : "end"), an end point determining process is carried out in accordance with the external operation of the operating person who uses the operation unit 25 or the remote controller 40 while watching the screen such as FIG.4 (especially, the second region 312). Then, the time information of the dynamic picture currently being reproduced is obtained (Step S17).

After the end of the step S16 or S17, it is judged whether or not both of the edition positions are determined (Step S18). If both are not determined (Step S18 : NO), the operational flow returns back to the step S11, and it becomes at the wait state.

On the other hand, if both are determined at the step S18 (Step S18 : YES), the editing process is ended. Then, the operational flow proceeds to the test reproducing process, namely, the checking process of the edited result (Step S19).

The test reproducing process firstly searches for a time before a defined period (for example, 3 seconds before) from a start point (Step S20). The reproduction is started from the searched time before the defined period from the start point (Step S21). Here, for example, the screen 301b shown in FIG.5 is displayed. In particular, the dynamic picture is displayed in the first region 311.

In succession, it is judged whether or not the switching of the reproduction screen is requested through the external operation from the operation unit 25 or the remote controller 40 (Step S22). Then, if the switching of the reproduction screen is requested (Step S22 : YES), the test reproducing process searches for a time before a defined period (for example, 3 seconds before) from an end point (Step S23). The reproduction is started from the searched time before the defined period from the end point (Step S24). Here, for example, the screen 301b shown in FIG.5 is displayed. In particular, the dynamic picture is displayed in the second region 312.

In succession, it is judged whether or not the switching of the reproduction screen is requested through the external operation from the operation unit 25 or the remote controller 40 (Step S25). Then, if the switching of the reproduction screen is requested (Step S25 : YES), the operational flow returns back to the step S20. Then, the test reproducing process with regard to the start point is again carried out.

On the other hand, if the switching of the reproduction screen is not requested at the step S22 or step S25 (Step S22 : NO or Step S25 : NO), it is then judged whether or not a change of the edition position is requested through the external operation from the operation unit 25 or the remote controller 40 (Step S26). Here, if the change of the edition position is not requested (Step S26 : NO), the series of the editing process and the test reproducing process are ended, assuming that the operating person watching the test reproducing process after the edition is satisfied with the edited result.

On the other hand, if the change of the edition position is requested (Step S26 : YES), the type of the operation command entered by the operation unit 25 or the remote controller 40, namely, the type of the change request is judged (Step S27). Here, if the change request is as for the start point (Step S27 : "start"), after the search for a start point time information position (Step S28), it is transiently stopped at the searched position (Step S30). Then, the operational flow returns back to the step S11. On the other hand, if the change request is as for the end point (Step S27 : "end"), after the search for an end point time information position (Step S29), it is transiently stopped at the searched position (Step S30). Then, the operational flow returns back to the step S11.

With reference to FIG.6, as mentioned above, according to the editing process and the test reproducing process in this embodiment, the operating person can simultaneously watch the start part and the end part of the dynamic picture portion, such as the title, the chapter, the scene, or the like, during the editing process or after the editing process, within the same screen. Thus, the operating person can carry out the editing work and the checking work in the condition that the operating person can visually easily understand the edition content on the screen.

By the way, in the above-mentioned embodiment, the two screens of the start part and the end part are displayed within the same screen. However, the present invention is not limited to it. For example, three or more screens, to which a characteristic part set as a part or component representative of each title or a central part and the like is added, in addition to the start part and the end part, may be described as the still picture or the dynamic picture within the same screen. Alternatively, instead of the start part and the end part, the two screens of the central part and the characteristic part may be displayed as the still picture or the dynamic picture within the same screen. Also, the start part and the end part may be related to the title, the chapter or the scene.

As mentioned above, according to the present invention, it is possible to improve the operability when the editing operation is carried out in the picture recording/reproducing apparatus, and it is especially possible to edit the dynamic picture and check the edited result in the condition that the operating person can visually easily understand the edition content on the screen.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. A picture editing apparatus **characterized in that** said picture editing apparatus comprises:
a display controlling device (21) for controlling a displaying unit so as to display a first part of a dynamic picture portion targeted for an edition among a plurality of dynamic picture portions constituting a dynamic picture with respect to which a recording or reproducing process is performed, in a first region (311) within a same screen (301a, 301b) on the displaying unit, and display a second part different from the first part of the dynamic picture portion targeted for the edition, in a second region (312) different from the first region within the same screen;
a specifying device (25, 40) for specifying one of the first part and the second part; and
an editing device (21) for performing an editing process with respect to the first part displayed in the first region in accordance with an edition command inputted from an external portion, in a condition that the second part is displayed in the second region, if the first part is specified by said specifying device, and performing an editing process with respect to the second part displayed in the second region in accordance with an edition command inputted from the external portion, in a condition that the first part is displayed in the first region, if the second part is specified by said specifying device.

2. A picture editing apparatus according to claim 1, **characterized in that**
the first part is a start part of the dynamic picture portion targeted for the edition and
the second part is an end part of the dynamic picture portion targeted for the edition.

3. A picture editing apparatus according to claim 1 or 2, **characterized in that** said display controlling device (21) controls the displaying unit so as to display the second part as a still picture in the second region (312) if the first part is specified by said specifying device (25, 40) and also displays the first part as a still picture in the first region (311) if the second part is specified by said specifying device.

4. A picture editing apparatus according to any one of claims 1 to 3, **characterized in that**
said display controlling device (21) controls the displaying unit so as to display the first part as a dynamic picture and said editing device (21) performs an editing process with respect to the first part displayed as the dynamic picture if the first part is specified by said specifying device (25, 40), and
said display controlling device controls the displaying unit so as to display the second part as a dynamic picture and said editing device performs an editing process with respect to the second part displayed as the dynamic picture if the second part is specified by said specifying device.

5. A picture editing apparatus according to any one of claims 1 to 4, **characterized in that** said picture editing apparatus further comprises a selecting device (25, 40) for selecting the dynamic picture portion targeted for the edition among the plurality of dynamic picture portions.

6. A picture editing apparatus according to any one of claims 1 to 5, **characterized in that** said display controlling device (21) controls the displaying unit so as to display the first or second part after the editing process if the first or second part is specified by said specifying device (25, 40).

7. A picture editing apparatus according to any one of claims 1 to 6, **characterized in that**
said display controlling device (21) controls the displaying unit so as to display a third part different from the first and second parts in the dynamic picture portion targeted for the edition, in a third region different from the first and second regions (311, 312) within the same screen (301a, 301b);
said specifying device (25, 40) can specify one of the first part to the third part; and
said editing device (21) performs an editing process with respect to the first part, in a condition that the second and third parts are displayed on the second and third regions respectively, if the first part is specified by said specifying device, performs an editing process with respect to the second part, in a condition that the first and third parts are displayed in the first and third regions respectively, if the second part is specified by said specifying device, and performs an editing process with respect to the third part, in a condition that the first and second parts are displayed in the first and second regions, respectively, if the third part is specified by said specifying device.

8. A picture editing apparatus **characterized in that** said picture editing apparatus comprises:
an editing device (21) for performing an editing process with respect to a dynamic picture portion recorded or reproduced in accordance with an edition command inputted from an external portion; and
a display controlling device (21) for controlling a displaying unit so as to display a start part of a dynamic picture portion with respect to which the editing process has been performed among the dynamic picture portion, in a first region (311) within a same screen (301a, 301b) on the displaying unit, and also display an end part of the dynamic picture portion with respect to which the editing process has been performed, in a second region (312) different from the first region within the same screen.

9. A picture editing apparatus according to claim 8, **characterized in that** said picture editing apparatus further comprises a specifying device (25, 40) for specifying one of the start and end parts, wherein
said display controlling device (21) controls the displaying unit so as to (i) display the end part as a still picture and the start part as a dynamic picture at the same time if the start part is specified by said specifying device and (ii) display the start part as a still picture and the end part as a dynamic picture at the same time if the end part is specified by said specifying device.

10. A picture editing apparatus according to claim 8, **characterized in that** said picture editing apparatus further comprises a specifying device (25, 40) for specifying a switching from one to another between the start and end parts, wherein
said display controlling device (21) controls the displaying unit so as to (i) display the one of the start and end parts as a dynamic picture and the another as a still picture at the same time if the editing process is performed and (ii) display the one of the start and end parts as a still picture and the another as a dynamic picture at the same time if the switching is specified by said specifying device.

11. A picture editing apparatus according to any one of claims 1 to 7, **characterized in that** said display controlling device (21) controls the displaying unit so as to display the first or second part as a dynamic picture only for a predetermined time period.

12. A picture editing apparatus according to any one of claims 8 to 10, **characterized in that** said display controlling device (21) controls the displaying unit so as to display the start or end part as a dynamic picture only for a predetermined time period.

13. A picture editing apparatus according to any one of claims 1 to 12, **characterized in that** said picture editing apparatus further comprises an input device (25, 40) for inputting the edition command.

14. A picture editing apparatus according to any one of claims 1 to 7 and 11, **characterized in that** the edition command includes a command to change a position, in a back or forth direction on a time axis of the dynamic picture, of at least one of the first and second parts.

15. A picture editing apparatus according to any one of claims 8 to 10 and 12, **characterized in that** the edition command includes a command to change a position, in a back or forth direction on a time axis of the dynamic picture, of at least one of the start and end parts.

16. A picture editing apparatus according to any one of claims 1 to 7, 11 and 14, **characterized in that** said display controlling device (21) controls the displaying unit so as to display a text data indicating a position of the first part on a time axis of the dynamic picture, on a position adjacent to or corresponding to the first region (311) within the same screen (301a, 301b), and display a text data indicating a position of the second part on the time axis of the dynamic picture, on a position adjacent to or corresponding to the second region (312) within the same screen.

17. A picture editing apparatus according to any one of claims 8 to 10, 12 and 15, **characterized in that** said display controlling device (21) controls the displaying unit so as to display a text data indicating a position of the start part on a time axis of the dynamic picture, on a position adjacent to or corresponding to the first region (311) within the same screen (301a, 301b), and display a text data indicating a position of the end part on the time axis of the dynamic picture, on a position adjacent to or corresponding to the second region (312) within the same screen.

18. A picture editing apparatus according to any one of claims 1 to 17, **characterized in that**
a plurality of dynamic picture portions constituting the dynamic picture are registered in a play list which at least indicates an output order of the dynamic picture portions, and
said editing device (21) performs the editing process by adding a change to the play list.

19. A picture editing apparatus according to claim 18, **characterized in that** the play list is recorded in one portion of a recording medium (200) on which the dynamic picture is recorded.

20. A picture editing apparatus according to claim 18 or 19, **characterized in that** said picture editing apparatus further comprises a memory device (22) for storing the play list.

21. A picture editing apparatus according to any one of claims 18 to 20, **characterized in that** address information corresponding to the plurality of dynamic picture portions on a recording medium (200) on which the dynamic picture is recorded is registered in the play list.

22. A picture editing method **characterized in that** said picture editing method comprises:
a display controlling step of controlling a displaying unit so as to display a first part of a dynamic picture portion targeted for an edition among a plurality of dynamic picture portions constituting a dynamic picture with respect to which a recording or reproducing process is performed, in a first region (311) within a same screen (301a, 301b) on the displaying unit, and display a second part different from the first part of the dynamic picture portion targeted for the edition, in a second region (312) different from the first region within the same screen;
a specifying step of specifying one of the first part and the second part; and
an editing step of performing an editing process with respect to the first part displayed in the first region in accordance with an edition command inputted from an external portion, in a condition that the second part is displayed in the second region, if the first part is specified by said specifying step, and performing an editing process with respect to the second part displayed in the second region in accordance with an edition command inputted from the external portion, in a condition that the first part is displayed in the first region, if the second part is specified by said specifying step.

23. A picture editing method **characterized in that** said picture editing method comprises:
an editing step of performing an editing process with respect to a dynamic picture portion recorded or reproduced in accordance with an edition command inputted from an external portion; and
a display controlling step of controlling a displaying unit so as to display a start part of a dynamic picture portion with respect to which the editing process has been performed among the dynamic picture portion, in a first region (311) within a same screen (301a, 301b) on the displaying unit, and also display an end part of the dynamic picture portion with respect to which the editing process has been performed, in a second region (312) different from the first region within the same screen.

24. A picture recording / reproducing apparatus (100) **characterized in that** said picture recording / reproducing apparatus comprises
(a) a picture editing apparatus, and
(b) a recording / reproducing device (17, 20, 37) for performing at least one of a recording process and a reproducing process of a dynamic picture,
said picture editing apparatus comprising:
a display controlling device (21) for controlling a displaying unit so as to display a first part of a dynamic picture portion targeted for an edition among a plurality of dynamic picture portions constituting a dynamic picture with respect to which a recording or reproducing process is performed, in a first region (311) within a same screen (301a, 301b) on the displaying unit, and display a second part different from the first part of the dynamic picture portion targeted for the edition, in a second region (312) different from the first region within the same screen;
a specifying device (25, 40) for specifying one of the first part and the second part; and
an editing device (21) for performing an editing process with respect to the first part displayed in the first region in accordance with an edition command inputted from an external portion, in a condition that the second part is displayed in the second region, if the first part is specified by said specifying device, and performing an editing process with respect to the second part displayed in the second region in accordance with an edition command inputted from the external portion, in a condition that the first part is displayed in the first region, if the second part is specified by said specifying device.

25. A picture recording / reproducing apparatus (100) **characterized in that** said picture recording / reproducing apparatus comprises
(a) a picture editing apparatus, and
(b) a recording / reproducing device (17, 20, 37) for performing at least one of a recording process and a reproducing process of a dynamic picture,
said picture editing apparatus comprising:
an editing device (21) for performing an editing process with respect to a dynamic picture portion recorded or reproduced in accordance with an edition command inputted from an external portion; and
a display controlling device (21) for controlling a displaying unit so as to display a start part of a dynamic picture portion with respect to which the editing process has been performed among the dynamic picture portion, in a first region (311) within a same screen (301a, 301b) on the displaying unit, and also display an end part of the dynamic picture portion with respect to which the editing process has been performed, in a second region (312) different from the first region within the same screen.

26. A computer program of instructions executable by a computer to perform method steps in a picture editing apparatus,
**characterized in that** said method steps comprise:
a display controlling step of controlling a displaying unit so as to display a first part of a dynamic picture portion targeted for an edition among a plurality of dynamic picture portions constituting a dynamic picture with respect to which a recording or reproducing process is performed, in a first region (311) within a same screen (301a, 301b) on the displaying unit, and display a second part different from the first part of the dynamic picture portion targeted for the edition, in a second region (312) different from the first region within the same screen;
a specifying step of specifying one of the first part and the second part; and
an editing step of performing an editing process with respect to the first part displayed in the first region in accordance with an edition command inputted from an external portion, in a condition that the second part is displayed in the second region, if the first part is specified by said specifying step, and performing an editing process with respect to the second part displayed in the second region in accordance with an edition command inputted from the external portion, in a condition that the first part is displayed in the first region, if the second part is specified by said specifying step.

27. A computer program of instructions executable by a computer to perform method steps in a picture editing apparatus,
**characterized in that** said method steps comprise:
an editing step of performing an editing process with respect to a dynamic picture portion recorded or reproduced in accordance with an edition command inputted from an external portion; and
a display controlling step of controlling a displaying unit so as to display a start part of a dynamic picture portion with respect to which the editing process has been performed among the dynamic picture portion, in a first region (311) within a same screen (301a, 301b) on the displaying unit, and also display an end part of the dynamic picture portion with respect to which the editing process has been performed, in a second region (312) different from the first region within the same screen.
